# FASCICULE DE BREVET EUROPEEN

(11) **EP 3 109 583 B1**
(45) Date de publication et mention de la délivrance du brevet: **29.11.2017**
(21) Numéro de dépôt: 16176241.4
(22) Date de dépôt: 24.06.2016
(51) Int. Cl.: F28G 1/12, B01D 35/02, F16L 55/24, F28G 15/00, B01D 29/01, B01D 29/64

(54) **SYSTÈME D'INTERCEPTION ET DE COLLECTE DE CORPS NETTOYANTS PAR BALAYAGE ALTERNATIF**
SYSTEM ZUM ABFANGEN UND SAMMELN VON REINIGUNGSKÖRPERN DURCH ALTERNATIVES KEHREN
SYSTEM FOR INTERCEPTING AND COLLECTING CLEANING BODIES BY ALTERNATING SWEEPING

(30) Priorité: 26.06.2015 FR 1555939
(43) Date de publication de la demande: 28.12.2016
(73) Titulaire: E. BEAUDREY & Cie., F-75018 Paris (FR)
(72) Inventeur: JACKSON, Philip, Eugène, Douglas, 75007 PARIS (FR)
(74) Mandataire: Petit, Maxime

(56) Documents cités:
- DE-A1- 3 917 520
- DE-A1- 3 938 566
- FR-A1- 2 815 548
- FR-A1- 3 009 201
- GB-A- 700 833

## Description

La présente invention se rapporte de manière générale à l'interception et à la collecte de corps véhiculés par un écoulement d'un fluide, particulièrement à un système d'interception et de collecte de corps véhiculés par un écoulement de fluide selon le préambule de la revendication 1 et un procédé de collecte selon la revendication 14. FR 3 009 201 divulgue un tel système. La présente invention se rapporte plus particulièrement au nettoyage des échangeurs de chaleur et, par exemple, des échangeurs de chaleur tubulaires formant condenseur.

Le nettoyage des échangeurs est généralement réalisé en continu par des éléments solides de nettoyage ou corps nettoyants, en pratique en forme de boule et réalisés par exemple en caoutchouc mousse, véhiculés par l'un des flux concernés, suivant des dispositions connues dans leur principe depuis longtemps, notamment par le brevet US 1 795 348.

Ces corps nettoyants sont généralement interceptés par un système d'interception qu'il est nécessaire de disposer sur la canalisation de sortie de l'échangeur de chaleur pour y récupérer ces corps nettoyants et les réinjecter dans la canalisation d'entrée de l'échangeur.

Ce système d'interception comporte globalement, dans une manchette, des moyens de filtration propres à la retenue recherchée.

A ce jour, et suivant diverses modalités pratiques de réalisation, ces moyens de filtration sont usuellement formés de deux grilles plates, qui, en position de service, ferment transversalement la manchette, en formant l'une avec l'autre un dièdre dont l'arête perpendiculaire à son axe est orientée vers l'aval. En pratique, ces deux grilles sont chacune individuellement montées pivotantes dans leur zone médiane d'axes parallèles à cette arête, pour pouvoir occuper l'une ou l'autre de deux autres positions, à savoir :
- une position de nettoyage, qui est inverse de leur position de service, et pour laquelle elles peuvent être soumises à un contre courant de lavage, et
- une autre position, qui est intermédiaire entre leur position de service et leur position de nettoyage, et pour laquelle, elles sont disposées dans le fil du courant et, en pratique, hors service.

Pour assurer un roulement convenable des corps nettoyants sur les grilles en direction de moyens de recueil desdits corps prévus le long de l'arête de ces grilles, lesdites grilles font nécessairement un angle d'inclinaison relativement faible par rapport à l'axe de la manchette en position de service.

Il en résulte que, pour loger les grilles, cette manchette a nécessairement une longueur relativement importante.

De plus, lorsque les grilles sont basculées pour l'opération de nettoyage un certain nombre de corps nettoyants bloqués sous les grilles sont renvoyés vers le milieu naturel en enfreignant souvent la réglementation applicable aux rejets.

L'installation d'un système d'interception ainsi équipé de telles grilles peut s'en trouver malaisée, notamment dans certaines installations préexistantes dans lesquelles n'est disponible qu'une faible longueur de canalisation entre la sortie de l'échangeur de chaleur et l'ouvrage maçonné sur lequel repose celui-ci.

Pour palier à ces inconvénients il a été proposé, en lieu et place de la manchette à grilles pivotantes, d'utiliser un filtre à éléments filtrants circulaires perpendiculaire à l'axe de la manchette et une trompe d'aspiration des corps nettoyants arrêtés par le filtre. La trompe d'aspiration récupère les corps arrêtés en les aspirant par l'intermédiaire d'une pompe qui les retourne ensuite en amont de l'entrée de l'échangeur. Ce système fait l'objet du brevet français n° 94 02109. Efficace et ne laissant passer aucun corps nettoyant, ce dispositif nécessite cependant une pompe d'assez grand débit (quatre pour cent au moins du débit principal), encombrante, chère et consommatrice d'énergie. De plus, le fort débit nécessite des tuyauteries d'assez grand diamètre qui sont, elles aussi, chères et encombrantes.

L'invention prévoit de pallier à au moins un des inconvénients précités en proposant, selon un premier aspect, un système d'interception et de collecte de corps véhiculés par un écoulement d'un fluide selon la revendication 1. Ce balayage mécanique de la surface filtrante, par un déplacement relatif de cette surface et du dispositif de nettoyage, permet de déloger les corps arrêtés par celle-ci par une action mécanique de contact entre les corps et le dispositif de nettoyage (ou par contact avec au moins un organe mécanique de balayage du dispositif qui est destiné à frotter ou racler contre la surface filtrante) et de les déplacer en les poussant, toujours par contact mécanique, vers les ouvertures (ex : latérales) de collecte. Le balayage est effectué dans un premier sens de déplacement (déplacement de la surface de filtration ou du dispositif de nettoyage) afin de balayer une première fois la surface par frottement mécanique entre le dispositif de nettoyage et la face amont de la surface (sens aller), puis dans un deuxième sens de déplacement afin de balayer la même surface (sens retour). Le mouvement de balayage est ainsi un mouvement alternatif d'aller et de retour (ce mouvement peut être effectué une fois ou répété plusieurs fois de manière consécutive) de l'un des deux éléments (surface ou dispositif de nettoyage) par rapport à l'autre en maintenant un contact mécanique par frottement entre les deux éléments. Ce système d'interception et de collecte est ainsi particulièrement simple et efficace et permet de ne pas avoir recours à un système tel que celui de l'art antérieur exposé ci-dessus dans lequel les corps nettoyants interceptés par la surface filtrante ne sont collectés que sous l'action d'une aspiration nécessairement très puissante (ici aucun débit d'aspiration n'est nécessaire). Le système selon l'invention ne nécessite donc pas, comme dans l'art antérieur exposé ci-dessus, une pompe d'aspiration de grand débit (quatre pour cent au moins du débit principal), encombrante, chère et consommatrice d'énergie. De ce fait, il n'est plus nécessaire de prévoir des tuyauteries de grand diamètre qui sont, elles aussi, chères et encombrantes.

Par ailleurs, le balayage mécanique de la surface filtrante qui est effectué par le système assure également un nettoyage de ladite surface.

Selon d'autres caractéristiques possibles prises isolément ou en combinaison l'une avec l'autre :
- la surface filtrante a une forme générale qui s'étend transversalement (et éventuellement axialement selon la forme retenue) dans le passage interne de manière à ce que les corps interceptés sur une zone de la première face amont de la surface filtrante et balayés par le dispositif de nettoyage longent ladite première face amont de la surface filtrante vers une ou des ouvertures de collecte (en se déplaçant vers l'une ou l'autre des extrémités ou bords périphériques opposés de celle-ci en direction d'ouvertures de collecte);
- les ouvertures de collecte sont disposées de manière adjacente à deux bords périphériques opposés de la surface filtrante ; ces deux bords opposés sont disposés suivant un axe transversal de la surface filtrante et cette dernière possède, suivant un autre axe transversal perpendiculaire, deux autres bords périphériques opposés qui sont disposés à une distance de la face interne de la portion de conduite qui ne permet pas de laisser passer les corps nettoyants véhiculés par l'écoulement ;
- le système comprend, à chacun des deux bords périphériques opposés de la surface filtrante, au moins une trémie de collecte des corps disposée en aval d'au moins une ouverture de collecte et qui communique avec ladite au moins une ouverture de collecte ; ainsi, une ou plusieurs trémies peuvent être disposées de chaque côté de la surface filtrante, entre celle-ci et la face interne de la portion de conduite ;
- chaque trémie de collecte des corps forme une chambre à turbulence comportant en entrée au moins un obstacle qui est apte à générer des tourbillons de fluide dans la chambre lorsqu'un écoulement de fluide rencontre ledit au moins un obstacle ; la génération de tourbillons dans la ou les chambres a pour effet de maintenir en mouvement les corps à l'intérieur de celle(s)-ci, empêchant ainsi toute stagnation ou bourrage desdits corps ;
- la surface filtrante a une forme générale choisie parmi les formes géométriques suivantes : une surface semi-cylindrique dont la face interne concave correspond à la première face amont, une surface semi-cylindrique dont la face externe convexe correspond à la première face amont, une surface plane formée d'un panneau sensiblement perpendiculaire à l'axe de la portion de conduite; ces exemples de formes conviennent particulièrement pour assurer l'interception et la collecte des corps de manière efficace ainsi que leur balayage mécanique par le dispositif de nettoyage lors du mouvement relatif alternatif de va et vient ;
- lorsque la surface filtrante est une surface semi-cylindrique dont la face interne concave correspond à la première face amont, au moins une ouverture de collecte des corps est disposée de part et d'autre de ladite surface filtrante, entre la face interne de la portion de conduite et un bord périphérique de la surface filtrante, au moins une trémie de collecte des corps étant disposée en aval de ladite au moins une ouverture de collecte ;
- la portion de conduite comprend également le dispositif de nettoyage mécanique ; le système logeant ainsi l'élément filtrant et le dispositif de nettoyage dans la portion de conduite est particulièrement compact et donc d'un encombrement axial relativement faible ; lorsque la surface filtrante est une surface sem i-cylindrique dont la face interne correspond à la première face amont, le dispositif de nettoyage est logé dans le demi-cylindre délimité par la grille de filtration (agencement radial par rapport au demi-cylindre), ce qui confère au système un encombrement axial particulièrement réduit ;
- la portion de conduite a une section transversale de forme polygonale ou circulaire ; la forme polygonale qui peut revêtir par exemple une forme générale rectangulaire est particulièrement adaptée pour loger un élément filtrant dont la surface filtrante est semi-cylindrique ; la forme circulaire peut être utilisée pour loger un élément filtrant qui présente, suivant une vue prise dans une section transversale, une forme générale rectangulaire ; dans une section axiale perpendiculaire l'élément filtrant peut avoir par exemple une forme cintrée (ex : semi-cylindrique) ou plane ;
- la portion de conduite ayant une section transversale de forme circulaire, le système comprend un ensemble de déflection (ensemble déflecteur) qui est positionné entre la face interne de la portion de conduite et la surface filtrante afin de diriger vers la surface filtrante (vers la première face amont de la surface) les corps véhiculés par l'écoulement et qui ne sont pas situés en vis-à-vis de la surface filtrante ;
- l'ensemble de déflection comprend au moins un déflecteur qui est positionné entre la face interne de la portion de conduite et la ou les ouvertures de collecte disposées de manière adjacente à chacun des deux bords périphériques opposés de la surface filtrante (par exemple, la surface peut avoir une forme semi-cylindrique dont la face interne concave est la première face amont) ; ainsi, au moins un déflecteur est positionné de part et d'autre de la surface filtrante ; ledit au moins un déflecteur est apte à rediriger directement les corps longeant la face interne de la paroi et qui rencontrent ledit au moins un déflecteur soit directement vers la ou les ouvertures de collecte adjacentes soit vers la surface filtrante située de l'autre côté de la ou des ouvertures de collecte selon la vitesse et la trajectoire des corps ; on notera qu'au moins un autre déflecteur peut être positionné entre la face interne de la portion de conduite et chacun des deux autres bords périphériques opposés de la dite surface filtrante et qui sont adjacents aux deux premiers bords périphériques opposés de la dite surface filtrante ;
- le dispositif de nettoyage est mobile tandis que ledit au moins un élément filtrant est fixe ; alternativement, ledit au moins un élément filtrant est mobile tandis que le dispositif de nettoyage est fixe ;
- l'un parmi le dispositif de nettoyage et ledit au moins un élément filtrant est apte à effectuer un mouvement de pivotement autour d'un axe fixe ou à effectuer un mouvement de translation rectiligne, chaque mouvement étant un mouvement d'aller et de retour alternatif ;
- le dispositif de nettoyage comprend un ou plusieurs organes de balayage mécanique qui sont en contact avec la première face amont de la surface filtrante ; ce ou ces organes sont maintenus au contact de la surface filtrante en position de repos, c'est-à-dire lorsqu'aucun mouvement du dispositif ou de la surface n'intervient ;
- la surface filtrante s'étend suivant deux directions transversales perpendiculaires entre elles, le ou les organes de balayage mécanique s'étendant transversalement suivant une des deux directions transversales et sur toute la dimension correspondante de la première face amont ;
- le ou les organes de balayage mécanique s'étendent parallèlement aux deux bords périphériques opposés de la surface filtrante ;
- la surface filtrante est formée par une grille de filtration à barreaux délimitant entre eux des ouvertures à travers lesquelles s'écoule le fluide et dans lesquelles des corps sont susceptibles de se loger, le ou les organes de balayage mécanique étant aptes, au contact avec la première face amont de la surface filtrante, à pénétrer au moins partiellement dans les ouvertures de la grille afin de déloger les éventuels corps qui s'y sont logés ;
- le ou les organes de balayage mécanique peuvent prendre la forme d'un brosse, d'un peigne ou de tout autre organe capable de repousser les éléments arrêtés sur la surface vers les ouvertures de collecte ;
- les corps véhiculés par l'écoulement sont des corps nettoyants pour échangeur de chaleur dans une application.

Selon une autre application, le système a pour but d'assurer la filtration de corps tels que des débris et autres éléments indésirables véhiculés par l'écoulement. Ce système peut ainsi par exemple être disposé en amont d'une installation quelconque, d'un échangeur de chaleur....

Selon un deuxième aspect, l'invention vise également une installation comprenant :
- au moins un échangeur de chaleur tubulaire,
- une conduite d'amenée d'un fluide raccordée à une entrée dudit au moins un échangeur de chaleur,
   - une conduite d'évacuation du fluide raccordée à une sortie dudit au moins un échangeur de chaleur,
- une pluralité de corps nettoyants véhiculés à l'intérieur dudit au moins un échangeur de chaleur pour son nettoyage,
   - un système d'interception et de collecte des corps nettoyants disposé sur la conduite d'évacuation de fluide,
caractérisée en ce que le système d'interception et de collecte des corps nettoyants est conforme au système tel que brièvement décrit ci-dessus.

Le système a ainsi pour but d'intercepter, de manière simple, efficace, et avec une dépense énergétique inférieure à celle de l'art antérieur précité, les corps nettoyants qui ont servi à nettoyer ledit au moins un échangeur et de les collecter afin de les remettre en circulation dans l'installation, en amont dudit au moins un échangeur, ou de les remplacer.

Selon un troisième aspect, l'invention vise en outre un procédé de collecte de corps véhiculés par un écoulement d'un fluide, caractérisé en ce que le procédé est mis en oeuvre dans un système d'interception des corps véhiculés par l'écoulement de fluide qui comprend :
- une portion de conduite comprenant une face interne qui délimite un passage interne axial pour l'écoulement du fluide,
- au moins un élément filtrant comprenant une surface filtrante comportant une première face amont et une seconde face opposée aval, la surface filtrante s'étendant transversalement dans le passage interne de manière à intercepter, par sa première face amont, des corps véhiculés par l'écoulement tout en laissant dégagées plusieurs ouvertures de collecte entre la surface filtrante et la face interne de la portion de conduite,
le procédé comprenant l'étape suivante :
- mise en mouvement dudit au moins un élément filtrant ou d'un dispositif de nettoyage en vis-à-vis dudit au moins un élément filtrant dans un mouvement alternatif d'aller et de retour afin d'effectuer un balayage mécanique de chaque zone de la première face amont de la surface filtrante par contact avec le dispositif de nettoyage en vis-à-vis, le balayage mécanique de la surface permettant de diriger les corps interceptés par la première face amont de la surface filtrante vers les ouvertures de collecte desdits corps.

Selon une caractéristique possible :
- le dispositif de nettoyage est mis en mouvement tandis que ledit au moins un élément filtrant est fixe ou inversement.

Les caractéristiques des premier et deuxième aspects de l'invention exposés plus haut s'appliquent également au troisième aspect de l'invention brièvement exposé ci-dessus.

D'autres caractéristiques et avantages apparaitront au cours de la description qui va suivre, donnée uniquement à titre d'exemple non limitatif et faite en référence aux dessins annexés, sur lesquels :
- la figure 1 est une vue générale schématique d'une installation comprenant un échangeur et un système d'interception et de collecte des corps nettoyants selon un mode de réalisation de l'invention ;
- la figure 2 est une vue agrandie et détaillée du système d'interception et de collecte des corps nettoyants de l'installation de la figure 1 en section selon un plan axial ;
- la figure 3 est une vue en section axiale du système de la figure 2 prise suivant un plan perpendiculaire au plan de la figure 2 et contenant l'axe de la portion de conduite;
- la figure 4 est une vue schématique agrandie en section selon le plan de coupe illustré sur la figure 2 du caniveau de collecte des corps nettoyants interceptés ;
- la figure 5 est une vue en section selon un plan axial d'une première variante de réalisation d'un système d'interception et de collecte des corps nettoyants dans lequel l'élément filtrant est plan;
- la figure 6 est une vue en coupe du système de la figure 5 suivant un plan perpendiculaire au plan de cette figure et à l'axe de la portion de conduite;
- la figure 7 est une vue schématique du système d'interception des figures 1 à 4 utilisé comme filtre ;
- la figure 8a est une vue schématique en perspective partielle d'une deuxième variante de réalisation d'un système d'interception et de collecte des corps nettoyants ;
- la figure 8b est une vue schématique en perspective partielle d'une troisième variante de réalisation d'un système d'interception et de collecte des corps nettoyants ;
- la figure 9 est une vue schématique en section selon un plan axial d'une quatrième variante de réalisation d'un système d'interception et de collecte des corps nettoyants.

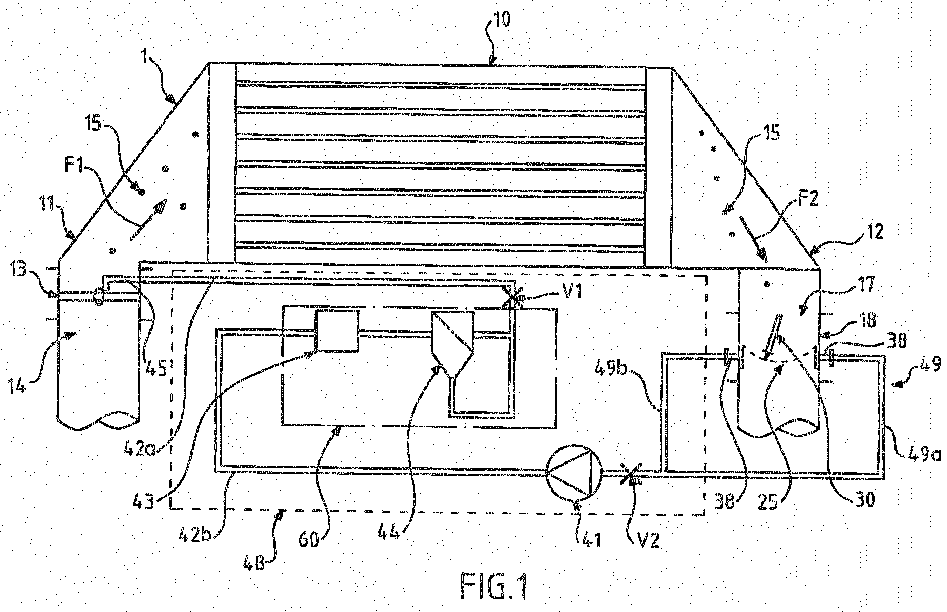

Sur la figure 1 on a schématisé, sous la référence générale notée 1, une installation selon un mode de réalisation de l'invention qui comprend plusieurs éléments dont un échangeur de chaleur formant condenseur 10. Comme schématisé par les flèches F1 et F2, cet échangeur est traversé par un flux de fluide de refroidissement, en l'espèce de l'eau, à la faveur d'une part, d'une canalisation d'entrée ou d'amenée du fluide 11 (flux d'entrée F1) et, d'autre part, d'une canalisation de sortie ou d'évacuation de fluide 12 (flux de sortie F2).

Il s'agit, en pratique d'un échangeur de chaleur tubulaire qui, par exemple est du type de celui succinctement décrit dans le document FR 2 716 530 mentionné ci-dessus.

Un tel échangeur de chaleur 10 étant bien connu par lui-même, et ne relevant pas, en propre, de la présente invention, il ne sera pas décrit plus avant ici.

Dans le mode de réalisation représenté, des moyens de filtration 13 sont interposés sur la canalisation d'entrée 11, à la faveur d'une manchette 14.

Ces moyens de filtration 13, qui ne sont pas impératifs, ne relèvent pas non plus de la présente invention et ne seront donc pas non plus décrits ici.

Il s'agit par exemple de moyens de filtration du type de ceux décrits dans le document FR 2 609 644.

De manière connue en soi, des corps nettoyants qui sont des éléments solides de nettoyage 15 sont susceptibles d'être mis en circulation permanente dans l'installation 1 et, notamment, dans l'échangeur de chaleur 10, pour le nettoyage en continu de celui-ci.

Il s'agit en pratique, de boules en caoutchouc mousse, dont le diamètre est légèrement supérieur au diamètre interne des tubes de l'échangeur de chaleur 10, et dont la densité, à l'état imprégné, est similaire à celle de l'eau.

Il convient d'assurer une gestion de ces corps nettoyants 15 dans l'installation 1, c'est-à-dire non seulement d'en assurer une circulation effective dans l'échangeur de chaleur 10, mais également, d'en contrôler le nombre et éventuellement les dimensions (permettant ainsi éventuellement d'éliminer les corps qui sont trop usés).

De manière connue en soi, ces corps nettoyants 15 sont systématiquement injectés dans la canalisation d'entrée 11, en aval des moyens de filtration 13, pour être entrainés par le flux entrant F1.

L'installation 1 comprend également, monté sur la canalisation de sortie 12, un système 17 d'interception et de collecte des corps nettoyants 15 en circulation selon un mode de réalisation de l'invention. Ce système sera décrit plus en détail ci-après.

L'installation 1 comprend en outre, délimité par des pointillés sur la figure 1, un système 48 de gestion des corps nettoyants interceptés et collectés qui recycle, vers la canalisation d'entrée 11, les corps nettoyants 15 retenus par le système d'interception 17.

De manière connue en soi, le système de gestion 48 comprend une conduite de recyclage 49 (portions de conduite 49a et 49b dans cet exemple) reliée, d'un coté au système d'interception 17 et, de l'autre coté, à l'aspiration d'une pompe 41 (dispositif d'aspiration), la pompe étant reliée à une conduite de retour 42a par l'intermédiaire, successivement, d'une conduite 42b, d'un compteur 43 et d'un collecteur 44. La conduite de retour 42a alimente la canalisation d'entrée 11, en aval des moyens de filtration 13, avec des corps nettoyants 15 à remettre en circulation dans l'installation. Ces corps nettoyants 15 sont réinjectés par l'intermédiaire de cannes d'injection ou tuyères 45 qui sont préférentiellement orientées à contre courant.

Une vanne V1 permet de couper le flux dans la conduite 42a en aval du collecteur 44 et ainsi d'isoler ledit collecteur 44 et le compteur 43 en collaboration avec une vanne V2 qui permet d'isoler la pompe 41 du système d'interception 17.

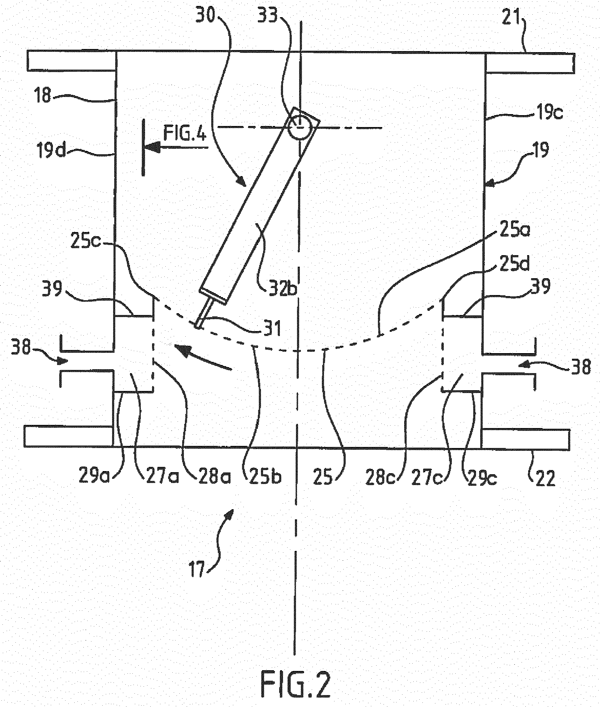

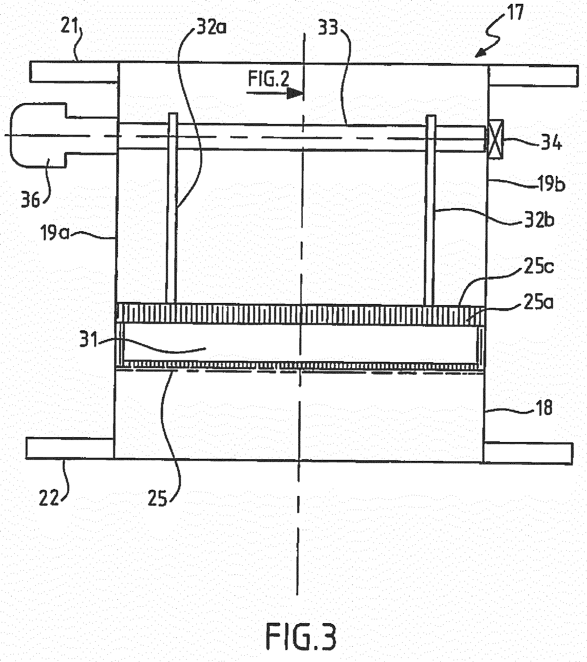

Le système d'interception et de collecte des corps nettoyants 17 est installé en aval de l'échangeur tubulaire 10 sur la conduite généralement circulaire 12 et comprend une portion de conduite ou manchette 18 qui comprend une bride d'entrée 21 et une bride de sortie 22 (figures 2 et 3).

La manchette 18 comporte une face interne qui délimite un passage interne axial pour l'écoulement de fluide issu de l'échangeur 10.

L'intérieur des brides 21 et 22 est découpé de manière à assurer la jonction avec un corps central 19 qui, ici, est de section transversale polygonale. Dans d'autres formes de réalisation la section transversale du corps adopte d'autres formes. Ce corps 19 est sensiblement de section transversale rectangulaire et peut comporter des angles coupés aux quatre coins. Le corps 19 comporte quatre faces planes 19a et 19b, 19c et 19d opposées deux à deux.

Le système 17 comporte, installé de manière centrée dans la manchette 18, notamment à l'intérieur du corps 19, un élément filtrant 25 qui comprend une surface filtrante s'étendant ici à la fois transversalement et axialement dans le passage axial interne au corps 19.

Comme représenté sur la figure 2, la surface filtrante comporte une première face amont 25a dirigée vers l'échangeur 10 et une seconde face opposée aval 25b.

Dans le mode de réalisation illustré sur les figures 1 à 3 la surface filtrante a une forme générale semi-cylindrique avec la concavité du semi-cylindre (face interne) tourné vers l'amont de la manchette 18 (et donc de la canalisation 12). L'axe du semi-cylindre est agencé perpendiculairement aux deux faces opposées 19a et 19b du corps (fig. 3). La surface filtrante se présente sous la forme d'une grille à barreaux placée dans l'écoulement de fluide provenant de la canalisation 12 et qui occupe la quasi-totalité de la section de passage interne de la manchette 18, de manière à intercepter les corps nettoyants 15 véhiculés par l'écoulement sur la face amont 25a de la grille.

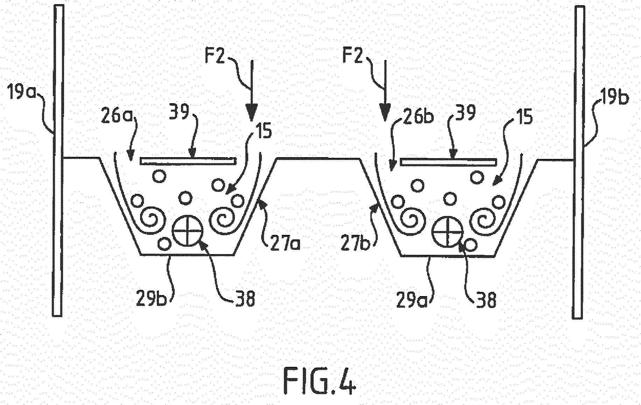

Sur chacun des deux cotés ou bords périphériques opposés du semi-cylindre, entre chaque bord/extrémité libre amont 25c, 25d du semi-cylindre et la face interne en regard de la manchette 18, sont disposées une ou plusieurs ouvertures de collecte de corps 15. Sur la figure 4 deux ouvertures de collecte 26a, 26b sont représentées disposées l'une à côté de l'autre, entre les deux faces opposées 19a, 19b du corps 19, à proximité du bord 25c du semi-cylindre. Deux autres ouvertures (non représentées) sont disposées de façon symétrique à proximité du bord opposé 25d du semi-cylindre 25. Ainsi, la surface filtrante 25 occupe presque toute la section de passage offerte à l'écoulement et aux corps 15 transportés à l'exception des ouvertures latérales de collecte 26a, 26b du côté du bord 25c du semi-cylindre 25 et celles non représentées du côté du bord opposé 25d. La surface filtrante s'étend notamment suivant deux directions transversales perpendiculaires entre elles ainsi que suivant une direction axiale perpendiculaire aux deux premières directions. Les deux bords périphériques opposés de la surface filtrante qui sont adjacents aux ouvertures de collecte sont espacés l'un de l'autre suivant une première des deux directions transversales d'extension de la surface filtrante.

Le système 17 comporte également derrière chaque ouverture de collecte, en aval de celle-ci, une trémie de collecte des corps 15 (figures 2 et 4). Sur la figure 4 deux trémies 27a, 27b sont représentées l'une à côté de l'autre entre les deux faces opposées 19a et 19b et, sur la figure 2, seule la trémie 27a est visible. Deux trémies identiques sont disposées de manière symétrique du côté opposé de la surface filtrante et, sur la figure 2, seule la trémie 27c est visible.

Chaque trémie de collecte forme une chambre à turbulences comportant en entrée, là où est située l'ouverture de collecte, un obstacle 39 (réalisé par exemple sous la forme d'un pontet) qui est apte à générer, lorsqu'un écoulement de fluide F2 (issu de la canalisation 12) rencontre ledit obstacle, des tourbillons de fluide, en aval de l'obstacle, c'est-à-dire dans la chambre comme illustré sur la figure 4.

De telles trémies à turbulences sont par exemple du type de celles décrites dans le brevet français N°8210055.

Chacune des trémies a un de ses deux flancs latéraux opposés qui est perforé et formé par une tôle perforée 28a, 28c (fig. 2) s'étendant axialement du bord périphérique respectif 25c, 25d de la surface filtrante au fond respectif 29a, 29c de la trémie. Ainsi, sur la figure 2 la trémie 27a est délimitée d'un côté par le flanc perforé 28a et du côté opposé par la face opaque 19d, tandis que la trémie 27c est délimitée d'un côté par le flanc perforé opposé 28c et du côté opposé par la face opaque 19c.

Une tubulure de sortie 38 est aménagée pour chaque trémie de collecte des corps (figs. 2 et 4) dans la face opaque correspondante 19d, 19c et est raccordée respectivement aux deux branches 49b, 49a de la conduite de recyclage 49 (fig.1).

Le système 17 comprend un dispositif de nettoyage 30 qui est contenu à l'intérieur de la manchette, notamment du corps 19, et est disposé en regard de la première face amont 25a de la surface filtrante, c'est-à-dire à l'intérieur du semi-cylindre.

Ce dispositif 30 comporte un ou plusieurs organes de balayage mécanique 31. Le dispositif est monté à l'intérieur de la manchette de telle manière que le ou les organes de balayage mécanique 31 entrent en contact avec la première face amont 25a, aussi bien au repos que lors du mouvement de balayage qui sera décrit plus loin afin de frotter/racler la surface filtrante au cours du mouvement.

Dans l'exemple décrit et illustré, le dispositif 30 comporte un seul organe balayage mécanique 31 mais la description qui va suivre s'applique également en cas de pluralité d'organes.

L'organe 31 est par exemple une brosse, une bavette souple, un peigne ...ou tout autre organe qui est capable d'exercer un frottement mécanique sur la première face amont de la surface filtrante lorsqu'un déplacement relatif entre l'organe et la surface est imposé par la conception du système. Deux possibilités sont offertes pour permettre le frottement de l'organe 31 sur la surface filtrante : soit l'organe se déplace, soit la surface se déplace. Dans l'exemple qui suit, seul le dispositif de nettoyage est mobile, la surface filtrante étant fixe. Cependant, la description qui va suivre s'applique également à l'autre possibilité : dispositif de nettoyage fixe et surface filtrante mobile.

L'organe balayage mécanique 31 est porté par un ou plusieurs bras, deux bras 32a, 32b dans le mode de réalisation illustré sur la figure 3. Les bras 32a, 32b parallèles entre eux sont eux-mêmes assujettis à un axe 33 qui est coaxial à l'axe du sem i-cylindre 25 (grille) et parallèle à la direction d'extension de l'organe 31. Cette direction d'extension de l'organe 31 est parallèle aux bords périphériques 25c, 25d et l'organe 31 s'étend transversalement (fig. 3) sur toute la dimension transversale correspondante de la surface, à l'exception toutefois d'un espace réduit entre chaque extrémité de l'organe et la face en vis-à-vis 19a, 19b pour des raisons de montage et de liberté de mouvement de l'organe 31 lors de son déplacement. L'axe 33 est monté à ses deux extrémités opposées sur les deux faces opposées 19a, 19b du corps 19 (fig. 3) et pivote autour de lui-même, porté par un palier 34 fixé à la face 19b du corps. Au niveau de la face opposée 19a du corps l'axe 33 est relié à un système d'entrainement 36 connu en soi qui l'entraine en rotation sur commande. Ce système 36 est par exemple un moteur. Le système d'entrainement 36 entraine en rotation l'axe 33 et imprime ainsi à l'organe de balayage mécanique 31 un mouvement de rotation alternatif d'aller et de retour ou mouvement oscillant (chaque mouvement aller et retour s'effectue sur un même secteur angulaire d'amplitude égale à l'arc de cercle illustré par la surface filtrante 25 sur la figure 2) lui permettant de balayer toute la première face amont 25a de la surface filtrante 25 du bord 25d au bord 25c, puis du bord 25c au bord 25d en exerçant un frottement mécanique sur chaque zone de celle-ci à chaque passage. Lorsque l'organe de balayage est une brosse, un balai..., les poils de celle-ci ou de celui-ci pénètrent en partie à l'intérieur des ouvertures situées entre les barreaux de la grille (la position au repos du dispositif 30 est ajustée pour permettre cet agencement), ce qui permet de déloger les corps qui ont pu se loger dans des ouvertures de la grille.

Le mouvement de rotation permet à l'organe de balayage mécanique 31, de décrocher/décoller par frottement les corps nettoyants et autres éléments arrêtés sur la face amont 25a de la grille 25.

Le mouvement de rotation permet, ensuite, à l'organe 31, au cours d'un même mouvement d'aller ou de retour, de pousser les corps nettoyants et autres éléments décrochés/décollés en direction de l'un des deux bords périphériques 25c, 25d (ici le bord 25c sur la figure 2), en longeant la face amont 25a comme illustré sur la figure 2 (la flèche indique le sens de rotation du dispositif 30).

Le mouvement de rotation se poursuivant, les corps 15 et autres éléments décrochés/décollés atteignent les ouvertures de collecte 26a, 26b adjacentes au bord 25c et situées respectivement en amont des trémies 27a et 27b (fig. 4) et les traversent pour être collectés dans lesdites trémies.

Le dispositif de nettoyage 30 repart ensuite dans l'autre sens de rotation, à partir du bord 25c afin de parcourir la même portion semi-circulaire jusqu'au bord opposé 25d, et ainsi de suite, assurant un mouvement de balayage alternatif de l'élément filtrant fixe en frottant chaque zone de celui-ci.

Le mouvement oscillant est assez lent, par exemple de l'ordre de quelques oscillations par minute, mais cela suffit pour décrocher/décoller les corps nettoyants et autres éléments arrêtés sur la face amont 25a de la grille 25.

On notera que l'action de balayage de la face amont 25a de la surface filtrante 25 a également pour effet de nettoyer cette dernière en même temps qu'elle déplace les corps 15 en vue de leur collecte. Les corps nettoyants 15 et autres éléments captés dans les trémies de collecte 27a-c sont ensuite aspirés par la pompe 41 via les tubulures de sortie 38 et la branche 49b (fig. 1).

L'eau chargée de corps 15 est dirigée vers une unité 60 de gestion des corps nettoyants déjà connue en soi. Cette unité 60 permet la collecte des corps et parfois leur comptage. A la sortie de cette unité, l'eau chargée de corps 15 est acheminée jusqu'aux cannes d'injection de corps 45 disposées en amont de l'échangeur tubulaire 10 à nettoyer.

Lorsque la circulation de corps 15 n'est pas utilisée dans l'installation 1, il est possible de nettoyer spécifiquement la surface filtrante 25 (grille) qui s'encrasse avec le temps avec des débris divers amenés par l'eau de refroidissement de l'échangeur 10. Il suffit pour cela de maintenir la pompe 41 en marche, de maintenir en service le mouvement d'oscillation de l'organe 31. La surface filtrante 25 est alors nettoyée par balayage et les débris sont graduellement stockés dans le sas à boules 44 maintenu en position de collecte des boules et débris.

Le système d'interception et de collecte par balayage mécanique alternatif peut fonctionner en permanence ou être opérationnel suivant des périodes définies adaptées au fonctionnement de l'installation, programmées ou non, voire à des instants non prédéfinis en fonction de la quantité de corps et autres éléments arrêtés par la surface filtrante. La mise en oeuvre du mécanisme de balayage peut être effectuée manuellement ou automatiquement.

A titre de variantes non représentées :
- le système d'interception et de collecte des corps nettoyants peut comprendre plusieurs éléments filtrants au lieu d'un seul ;
- l'élément filtrant peut être formé de plusieurs portions assemblées les unes avec les autres ;
- les trémies de recueil peuvent revêtir une forme différente et leur nombre ainsi que leurs dimensions peuvent varier ;
- les obstacles 39 (ex : pontets sur la figure 4) peuvent revêtir toutes formes : gouttières, etc....;
- le système d'entrainement 36 peut alternativement comprendre un vérin, une crémaillère, une vis, une chaîne, une courroie...
- la tôle perforée 28a, 28c peut alternativement être un flanc poreux.

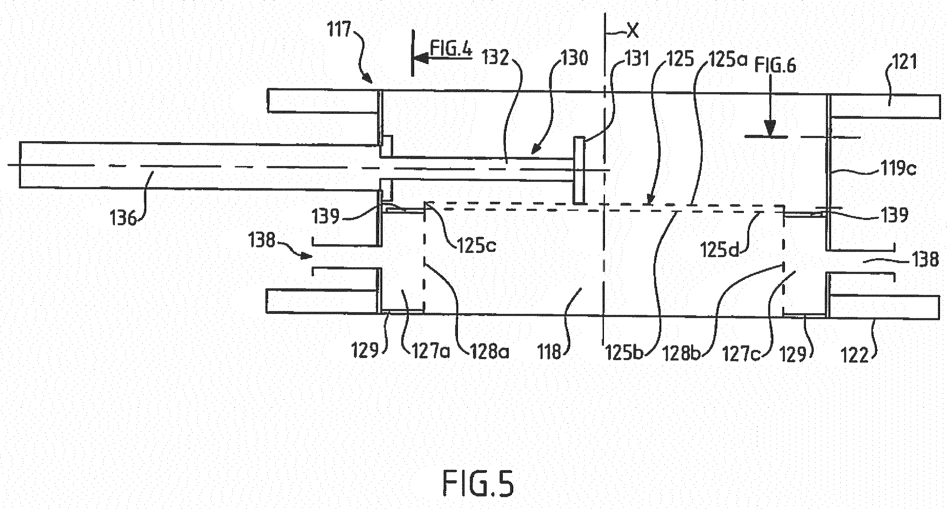

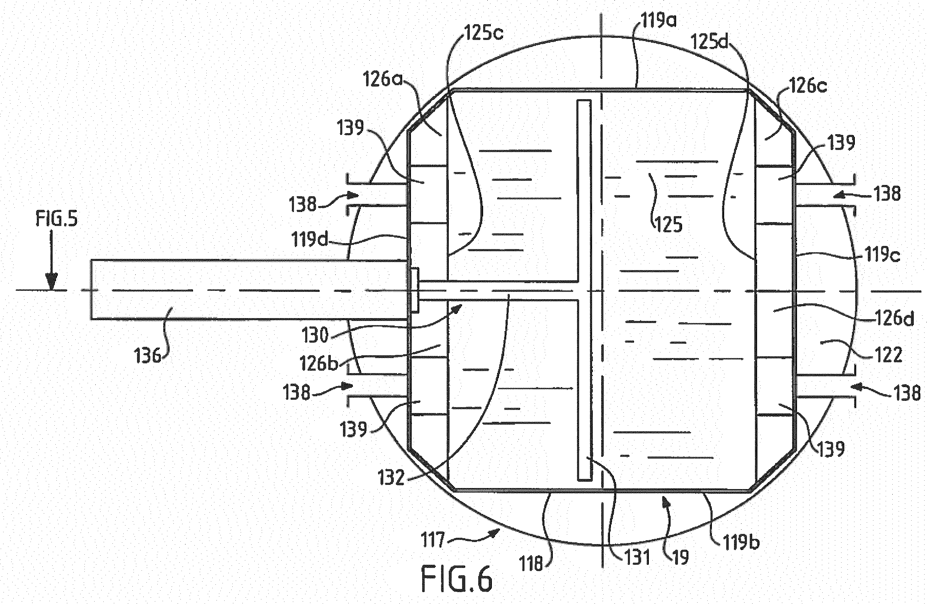

Les figures 5 et 6 illustrent une variante de réalisation d'un système d'interception et de collecte par balayage mécanique alternatif selon l'invention dans lequel soit la surface filtrante soit le dispositif de nettoyage est apte à effectuer un mouvement de translation rectiligne le long et contre l'autre élément qui est immobile. La surface filtrante est plane dans cette variante.

Sur ces figures, le système 117 comprend un élément filtrant plat 125 (avec une face amont 125a et une face aval 125b planes) installé sensiblement perpendiculairement à l'axe X de la manchette 118, dans le corps 119 de celle-ci. A chacun des deux bords périphériques opposés 125c, 125d, sont disposées les ouvertures de collecte débouchant dans les trémies de collecte situées en aval (la disposition est identique à celle de la figure 4). Ici, deux ouvertures de collecte 126a, 126b, d'une part, et 126c, 126d, d'autre part, sont prévues le long de chaque bord périphérique respectif 125c, 125d (fig. 6). Les trémies de collecte 127a, 127c (fig. 5) sont en forme de chambre de turbulence, équipées d'un obstacle générateur de tourbillons 139 et l'un des deux flancs opposés, 128a, 128b est par exemple poreux (non nécessairement perforé). Des tubulures 138 sont aménagées dans le flanc opposé de chaque trémie pour l'extraction des corps nettoyants.

Le système 117 comprend un dispositif de nettoyage par balayage mécanique 130 qui comporte un organe de balayage mécanique 131 (brosse, peigne, bavette souple...) qui a ici une forme générale de raclette. L'organe 131 s'étend transversalement dans la manchette, parallèlement aux bords 125c, 125d et comporte une tige support 132 reliée à un élément d'entrainement 136 tel qu'un vérin, une crémaillère, une vis, une chaîne, une courroie. Sous l'action de l'élément d'entrainement 136, l'organe 131 se déplace comme un piston et adopte un mouvement de translation rectiligne (perpendiculaire aux bords 125c, 125d) le long de la face amont 125a et en frottant/raclant celle-ci, dans le sens aller, du bord 125c au bord 125d (figs 5 et 6), puis dans le sens retour, du bord 125d au bord 125c (mouvement alternatif d'aller et de retour de l'organe 131). Les corps arrêtés par l'élément filtrant 125 sont décrochés/décollés par l'organe 131 et poussés par ce dernier le long de l'élément filtrant vers l'un ou l'autre bord 125c, 125d (selon le sens de déplacement) et dans les ouvertures adjacentes où ils sont ensuite évacués via les trémies et les tubulures 138. Le mouvement de balayage alternatif peut être effectué une fois (un aller et retour) ou plusieurs fois consécutivement si cela s'avère nécessaire (ceci s'applique également au mode des figures 1 à 4 ainsi qu'aux variantes décrites avant et après).

Le système 117 comprend de nombreux autres éléments identiques à ceux des figures précédentes et qui ne seront pas de nouveau décrits ici.

Le système 117 peut être utilisé lorsque la place disponible axialement pour la manchette est limitée car l'encombrement axial du système est réduit.

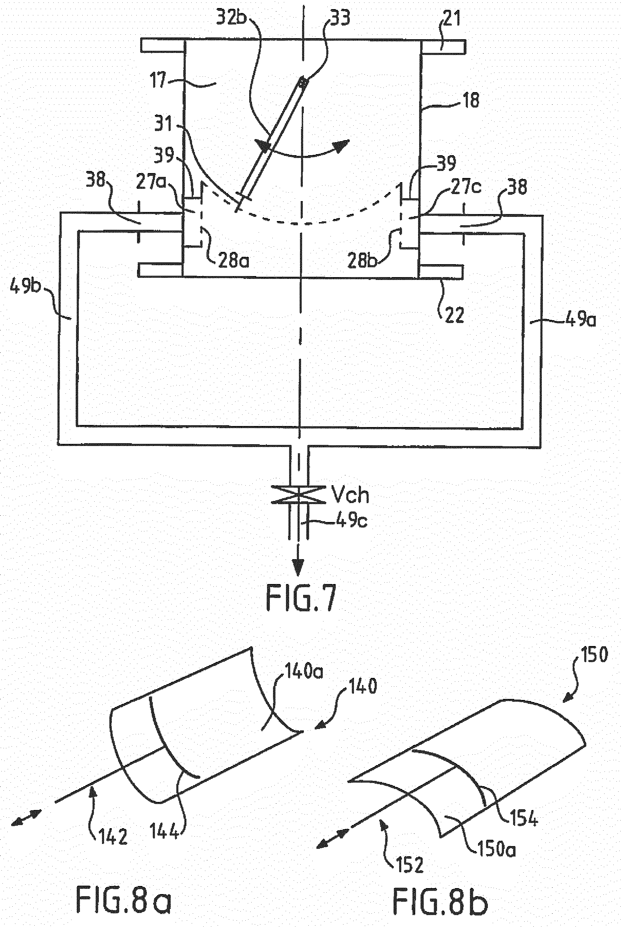

La figure 7 illustre un deuxième mode d'utilisation du système selon l'invention dans lequel le système 17 fait office de filtre pur, par exemple disposé en amont de l'échangeur 10 sur la figure 1 pour le protéger, en lieu et place des moyens de filtration 13.

Sur la figure 7 les mêmes éléments que ceux des figures du premier mode conservent les mêmes références par commodité.

Les tuyauteries de sortie 49a, 49b raccordées aux tubulures de sortie 38 des trémies de collecte 27a-c rejoignent une tuyauterie unique 49c équipée d'une vanne Vch et qui est raccordée par exemple en aval de l'échangeur ou à l'égout (non représenté).

La description et le fonctionnement du système 17 sont les même que dans le premier mode avec les corps de nettoyage 15.

Les tubulures 38 et les tuyauteries 49a-c peuvent être d'un diamètre supérieur à celui utilisé dans le mode de la figure 1, en aval de l'échangeur, pour l'extraction des seuls corps nettoyants. Cette disposition permet d'éliminer des plus gros débris.

Le débit sortant des trémies de collecte 27a-c est créé par la différence de pression régnant dans l'installation entre l'amont de l'échangeur à protéger et par exemple l'aval de celui-ci où la tuyauterie 49c débouche.

Les figures 8a et 8b illustrent deux variantes de réalisation dans lesquelles l'élément filtrant a une surface filtrante non plane, par exemple semi-cylindrique et le dispositif de nettoyage a la forme générale de raclette des figures 5 et 6 en vue dessus. Toutefois, l'organe de balayage mécanique du dispositif de nettoyage s'étend transversalement à la surface suivant une forme incurvée correspondant à la courbure de la face amont semi-cylindrique de cette surface filtrante, ce qui lui permet de se déplacer en frottant cette face amont. Les éléments non représentés sur ces figures sont identiques à ceux des autres figures ou adaptés pour des besoins de différence de forme.

La figure 8a représente une surface filtrante 140 dont la face amont 140a est la face concave (face interne) de l'élément filtrant semi-cylindrique et le dispositif de nettoyage 142 comporte un organe de balayage mécanique 144 dont la seule différence avec l'organe 131 des figures 5 et 6 est sa courbure transversale adaptée à celle de la face amont 140a.

La figure 8b représente une surface filtrante 150 dont la face amont 150a est la face convexe (face externe) de l'élément filtrant semi-cylindrique et le dispositif de nettoyage 152 comporte un organe de balayage mécanique 154 dont la seule différence avec l'organe 131 des figures 5 et 6 est sa courbure transversale adaptée à celle de la face amont 150a.

Tous les avantages et caractéristiques liés aux modes et variantes des figures 1 à 7 s'appliquent également aux variantes des figures 8a et 8b, sauf en cas d'incompatibilité ou d'impossibilité technique.

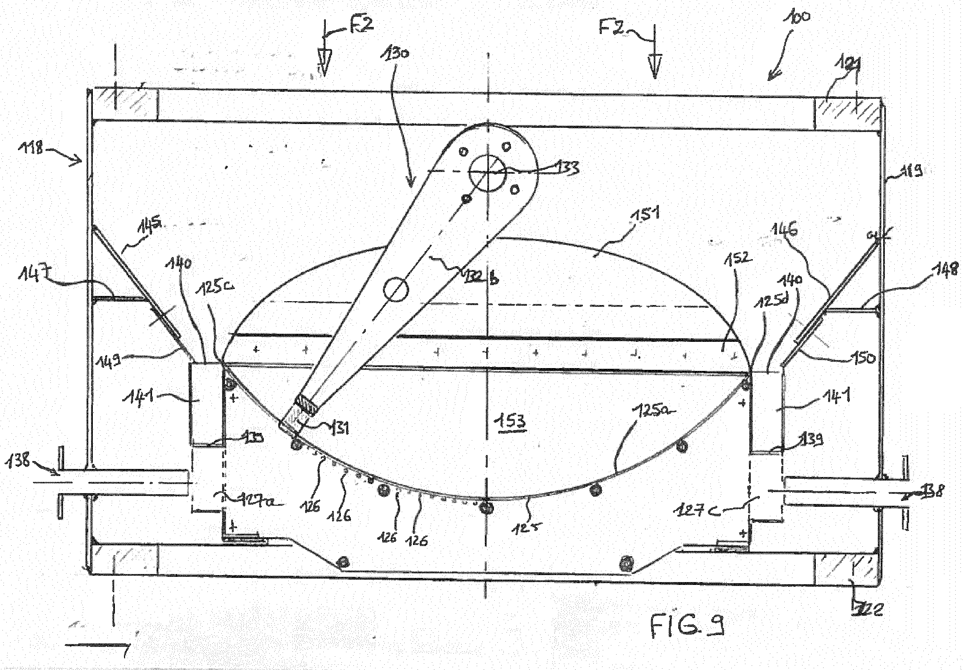

La figure 9 illustre une quatrième variante de réalisation d'un système 100 d'interception et de collecte de corps nettoyants vue suivant une section axiale. Dans cette variante, la portion de conduite ou manchette 118 dans laquelle sont logés l'élément filtrant (surface filtrante) 125 et le dispositif de nettoyage 130 comporte un corps central 119 ayant une section transversale de forme générale circulaire. L'élément filtrant 125 est disposé à distance de la face interne de la portion de conduite 118.

La portion de conduite 118 comprend les brides d'entrée 121 et de sortie 122.

La surface filtrante 125 a une forme générale semi-cylindrique comme sur les figures 1 à 3, avec la face interne concave 125a dirigée vers l'amont (face à l'écoulement F2). Les barreaux espacés 126 de la grille filtrante sont représentés. Les barreaux perpendiculaires ne sont pas représentés ici.

Le dispositif de nettoyage 130 est disposé en vis-à-vis de la face interne concave 125a et est mobile dans un mouvement alternatif d'aller et de retour comme sur les figures 1 à 3. Le dispositif 130 présente la même configuration générale que le dispositif 30 avec deux bras portant un organe mécanique de balayage 131 (un seul des bras 132b est représenté ici, comme sur la figure 2) et montés rotatifs autour d'un axe transversal 133. Le bras 132b présente une section qui s'amenuise en direction de son extrémité reliée à l'organe de balayage.

La surface filtrante possède deux bords périphériques opposés 125c, 125d (les deux autres bords opposés adjacents perpendiculaires ne sont pas visibles ici) comme pour la surface 25 de la figure 2.

Un ensemble de trémie à collecte est disposé de manière adjacente à chacun des bords 125c, 125d, en aval d'une ou de plusieurs ouvertures de collecte. Sur la figure 9 sont représentées, comme sur la figure 2, deux trémies à collecte opposées 127a, 127c reliées chacune à une tubulure de sortie 138. Chaque trémie de collecte comprend en entrée un obstacle 139 comme l'obstacle 39 des figures 2 et 4. On notera que plusieurs trémies à collecte sont disposées l'une à côté de l'autre comme sur la figure 4. En amont des obstacles 139 et au niveau des bords 125c, 125d, des ouvertures 140 de collecte des corps nettoyants sont aménagées. Ces ouvertures 140 débouchent sur un passage (ou tranchée) 141 au fond duquel les obstacles 139 sont disposés. On notera qu'une seule ouverture 140 est par exemple prévue de manière adjacente à chaque bord 125c, 125d. Ces ouvertures de collecte sont disposées en amont des trémies de collecte et sont appelées premières ouvertures de collecte. Des secondes ouvertures de collecte non représentées ici sont celles 26a, 26b de la figure 4 (autour des obstacles 39). Le passage 141 entre chaque bord 125c, 125d est plus haut que sur celui de la figure 2 et forme en quelque sorte la partie rétrécie d'un entonnoir pour les corps nettoyants.

Le système d'interception et de collecte 100 comprend également, entre la face interne de la portion de conduite 118 et les deux bords périphériques opposés 125c, 125d de la surface filtrante, un ensemble de déflection ou ensemble déflecteur. Cet ensemble a pour fonction de rediriger les corps nettoyants véhiculés par l'écoulement et qui sont à proximité de la paroi de la portion de conduite (et non en vis-à-vis de la face amont de la surface filtrante) vers le centre de la portion de conduite, c'est-à-dire vers la surface filtrante, voire directement vers les ouvertures de collecte 140 selon la vitesse et la trajectoire des corps déviés. Cet ensemble joue en quelque sorte le rôle de la partie évasée d'un entonnoir pour les corps nettoyants.

Dans le cas présent, l'ensemble de déflection comprend deux déflecteurs 145, 146 situés en vis-à-vis et dont la surface de contact avec les corps est inclinée par rapport à la paroi de telle manière que le prolongement fictif de cette surface rencontre l'ouverture de collecte 140. Cet agencement permet de dévier les corps vers l'ouverture.

Chaque déflecteur est monté de manière fixé à la paroi par un ou plusieurs bras de fixation 147, 148 ou par un élément de raccord unique incurvé. Une bavette 149, 150 est fixée à la partie inférieure de chaque déflecteur (du côté opposé à la surface de contact) et prolonge la surface de contact de celui-ci jusqu'à l'ouverture de collecte pour empêcher que des corps ne puissent s'infiltrer entre le déflecteur et l'ouverture.

Comme représenté sur la figure 9, un autre déflecteur 151 est disposé de manière adjacente à l'un des deux autres bords périphériques opposés de la surface filtrante et une bavette 152 est également fixée en partie inférieure.

Ce déflecteur 151 redirige les corps directement en direction de la surface filtrante. Un autre déflecteur non représenté sur cette figure et disposé en vis-à-vis du déflecteur 151 (de manière symétrique) est également présent dans le système.

On notera qu'une paroi axiale est montée et fixée à chacun des deux autres bords périphériques opposés de la surface filtrante afin de fermer l'espace interne ouvert semi-cylindrique. La paroi 153 sur la figure 9 est l'une de ces deux parois et elle a la forme générale d'une demi-lune.

Les déflecteurs ont tous une forme identique qui, comme représenté sur la figure 9, a une partie inférieure rectiligne et une partie supérieure incurvée qui épouse la forme cylindrique de la face interne de la portion de conduite 118.

On notera que d'autres formes de déflecteurs peuvent alternativement être utilisées, de même qu'un nombre différent de déflecteurs. Un unique déflecteur périphérique, par exemple sous la forme d'une collerette annulaire, peut ainsi être utilisé.

Les dimensions des déflecteurs et/ou leur inclinaison peuvent également varier.

Les autres caractéristiques et avantages ainsi que le fonctionnement des modes de réalisation et des variantes des figures précédentes s'appliquent également ici.

Bien que la description ci-dessus des différents modes et variantes ait été faite avec un dispositif de nettoyage mobile et un élément filtrant fixe, cette description s'adapte également à la situation inverse : dispositif de nettoyage fixe et un élément filtrant mobile.

On notera que dans tout ce qui précède le dispositif de nettoyage est formé d'un seul élément. Toutefois, le système d'interception et de collecte peut être dupliqué selon les besoins et/ou comporter plus d'un organe mécanique de balayage. Cet organe ou ces organes peuvent être montés de manière mobile par rapport à leur support sur le dispositif de nettoyage.

## Revendications

1. Système d'interception et de collecte de corps (15) véhiculés par un écoulement d'un fluide, comprenant :
- une portion de conduite (18) comprenant une face interne qui délimite un passage interne axial pour l'écoulement du fluide,
- au moins un élément filtrant comprenant une surface filtrante (25) comportant une première face amont (25a) et une seconde face opposée aval (25b), la surface filtrante s'étendant transversalement dans le passage interne de manière à intercepter, par sa première face amont, des corps véhiculés par l'écoulement
- un dispositif de nettoyage (30) qui est disposé en regard de la première face amont (25a) de la surface filtrante et qui est apte à balayer mécaniquement ladite première face amont, **caractérisé en ce que** plusieurs ouvertures de collecte (26a, 26b) sont dégagées entre la surface filtrante et la face interne de la portion de conduite et le dispositif de nettoyage (30) et ledit au moins un élément filtrant (25) étant dans un mouvement relatif alternatif d'aller et de retour l'un par rapport à l'autre de manière à ce que chaque zone de la première face amont de la surface filtrante soit balayée mécaniquement par le dispositif de nettoyage au cours de chaque mouvement relatif alternatif d'aller et de retour afin de diriger les corps interceptés par la première face amont (25a) de la surface filtrante vers les ouvertures de collecte desdits corps.

2. Système selon la revendication 1, **caractérisé en ce que** la surface filtrante (25) a une forme générale qui s'étend transversalement dans le passage interne de manière à ce que les corps interceptés sur une zone de la première face amont (25a) de la surface filtrante et balayés par le dispositif de nettoyage (30) longent ladite première face amont de la surface filtrante vers une ou des ouvertures de collecte (26a, 26b).

3. Système selon la revendication 1 ou 2, **caractérisé en ce que** les ouvertures de collecte sont disposées de manière adjacente à deux bords périphériques opposés de la surface filtrante.

4. Système selon la revendication 3, **caractérisé en ce qu'**il comprend, à chacun des deux bords périphériques opposés de la surface filtrante, au moins une trémie de collecte (27a, 27b) des corps formant une chambre à turbulence, ladite au moins une trémie de collecte étant disposée en aval d'au moins une ouverture de collecte (26a, 26b) et communiquant avec ladite au moins une ouverture de collecte.

5. Système selon l'une des revendications 1 à 4, **caractérisé en ce que** la surface filtrante a une forme générale choisie parmi les formes géométriques suivantes : une surface semi-cylindrique (25) dont la face interne concave correspond à la première face amont, une surface semi-cylindrique (25) dont la face externe convexe correspond à la première face amont, une surface plane formée d'un panneau sensiblement perpendiculaire à l'axe de la portion de conduite.

6. Système selon l'une des revendications 3 à 4 et la revendication 5, **caractérisé en ce que**, lorsque la surface filtrante est une surface semi-cylindrique (25) dont la face interne concave correspond à la première face amont, au moins une ouverture de collecte (26a, 26b) des corps est disposée de part et d'autre de ladite surface filtrante, entre la face interne de la portion de conduite et un bord périphérique de la surface filtrante, au moins une trémie de collecte (27a, 27b) des corps étant disposée en aval de ladite au moins une ouverture de collecte.

7. Système selon l'une des revendications 1 à 6, **caractérisé en ce que** la portion de conduite (18) a une section transversale de forme polygonale ou circulaire.

8. Système selon la revendication 7, **caractérisé en ce que** la portion de conduite (18) ayant une section transversale de forme circulaire, le système comprend un ensemble de déflection (145, 146, 151) qui est positionné entre la face interne de la portion de conduite (118) et la surface filtrante (125) afin de diriger vers la surface filtrante les corps véhiculés par l'écoulement et qui ne sont pas situés en vis-à-vis de la surface filtrante.

9. Système selon les revendications 3 et 8, **caractérisé en ce que** l'ensemble de déflection comprend au moins un déflecteur (145, 146) qui est positionné entre la face interne de la portion de conduite et la ou les ouvertures de collecte (140) disposées de manière adjacente à chacun des deux bords périphériques opposés (125c, 125d) de la surface filtrante.

10. Système selon l'une des revendications 1 à 9, **caractérisé en ce que** le dispositif de nettoyage (30) est mobile tandis que ledit au moins un élément filtrant (25) est fixe ou inversement.

11. Système selon l'une des revendications 1 à 12, **caractérisé en ce que** l'un parmi le dispositif de nettoyage (30) et ledit au moins un élément filtrant (25) est apte à effectuer un mouvement de pivotement autour d'un axe fixe ou à effectuer un mouvement de translation rectiligne, chaque mouvement étant un mouvement d'aller et de retour alternatif.

12. Système selon l'une des revendications 1 à 11, **caractérisé en ce que** le dispositif de nettoyage (30) comprend un ou plusieurs organes de balayage mécanique qui sont en contact avec la première face amont (25a) de la surface filtrante.

13. Installation (1) comprenant :
- au moins un échangeur de chaleur tubulaire (10),
- une conduite d'amenée d'un fluide (11) raccordée à une entrée dudit au moins un échangeur de chaleur,
- une conduite d'évacuation du fluide (12) raccordée à une sortie dudit au moins un échangeur de chaleur,
- une pluralité de corps nettoyants (15) véhiculés à l'intérieur dudit au moins un échangeur de chaleur pour son nettoyage,
- un système d'interception et de collecte des corps nettoyants disposé sur la conduite d'évacuation de fluide,
- **caractérisée en ce que** le système (17) d'interception et de collecte des corps nettoyants est conforme à l'une des revendications 1 à 12.

14. Procédé de collecte de corps (15) véhiculés par un écoulement d'un fluide, **caractérisé en ce que** le procédé est mis en oeuvre dans un système (17) d'interception des corps véhiculés par l'écoulement de fluide qui comprend :
- une portion de conduite (18) comprenant une face interne qui délimite un passage interne axial pour l'écoulement du fluide,
- au moins un élément filtrant comprenant une surface filtrante (25) comportant une première face amont (25a) et une seconde face opposée aval (25b), la surface filtrante s'étendant transversalement dans le passage interne de manière à intercepter, par sa première face amont, des corps véhiculés par l'écoulement tout en laissant dégagées plusieurs ouvertures de collecte (26a, 26b) entre la surface filtrante et la face interne de la portion de conduite,
le procédé comprenant l'étape suivante :
- mise en mouvement dudit au moins un élément filtrant (25) ou d'un dispositif de nettoyage (30) en vis-à-vis dudit au moins un élément filtrant (25) dans un mouvement alternatif d'aller et de retour afin d'effectuer un balayage mécanique de chaque zone de la première face amont (25a) de la surface filtrante par contact avec le dispositif de nettoyage en vis-à-vis, le balayage mécanique de la surface permettant de diriger les corps interceptés par la première face amont de la surface filtrante vers les ouvertures de collecte (26a, 26b) desdits corps.

15. Procédé selon la revendication 14, **caractérisé en ce que** le dispositif de nettoyage (30) est mis en mouvement tandis que ledit au moins un élément filtrant (25) est fixe ou inversement.

## Patentansprüche

1. System zum Abfangen und Sammeln von Körpern (15), die von einem Fluidstrom befördert werden, umfassend:
- einen Leitungsabschnitt (18), umfassend eine Innenseite, die einen axialen internen Durchgang für das Fließen des Fluids bestimmt,
- mindestens ein Filterelement, umfassend eine filtrierende Oberfläche (25), umfassend eine oberstromige Seite (25a) und eine zweite gegenüberliegende unterstromige Seite (25b), wobei sich die filtrierende Oberfläche transversal in dem internen Durchgang derart erstreckt, dass mit seiner ersten oberstromigen Seite Körper abgefangen werden, die durch das Fließen befördert werden,
- eine Reinigungsvorrichtung (30), die gegenüber der ersten oberstromigen Seite (25a) der filtrierenden Oberfläche angeordnet ist und die imstande ist, die erste oberstromige Seite mechanisch zu kehren, **dadurch gekennzeichnet, dass** mehrere Sammelöffnungen (26a, 26b) zwischen der filtrierenden Oberfläche und der Innenseite des Leitungsabschnitts ausgespart sind und dass die Reinigungsvorrichtung (30) und das mindestens eine Filterelement (25) in einer relativen abwechselnden Hin- und Rückbewegung zueinander sind, so dass jede Zone der ersten oberstromigen Seite der filtrierenden Oberfläche von der Reinigungsvorrichtung bei jeder relativen Hin- und Rückbewegung mechanisch gekehrt wird, um die von der ersten oberstromigen Seite (25a) der filtrierenden Oberfläche eingefangenen Körper zu den Sammelöffnungen der Körper zu lenken.

2. System nach Anspruch 1, **dadurch gekennzeichnet, dass** die filtrierende Oberfläche (25) eine allgemeine Form hat, die sich transversal im internen Durchgang derart erstreckt, dass sich die auf einer Zone der ersten oberstromigen Seite (25a) der filtrierenden Oberfläche und von der Reinigungsvorrichtung (30) gekehrten abgefangenen Körper auf der ersten oberstromigen Seite der filtrierenden Oberfläche zu einer oder Sammelöffnungen (26a, 26b) entlang bewegen.

3. System nach Anspruch 1 oder 2, **dadurch gekennzeichnet, dass** die Sammelöffnungen benachbart zu zwei gegenüberliegenden Umfangsrändern der filtrierenden Oberfläche angeordnet sind.

4. System nach Anspruch 3, **dadurch gekennzeichnet, dass** es an jedem der zwei gegenüberliegenden Umfangsränder der filtrierenden Oberfläche mindestens einen Sammeltrichter (27a, 27b) der Körper umfasst, der eine Turbulenzkammer bildet, wobei der mindestens eine Sammeltrichter unterstromig zu mindestens einer Sammelöffnung (26a, 26b) angeordnet ist und mit der mindestens einen Sammelöffnung kommuniziert.

5. System nach einem der Ansprüche 1 bis 4, **dadurch gekennzeichnet, dass** die filtrierende Oberfläche eine allgemeine Form hat, die aus den folgenden geometrischen Formen ausgewählt ist: eine halbzylindrische Oberfläche (25), deren konkave Innenseite der ersten oberstromigen Seite entspricht, eine halbzylindrische Oberfläche (25), deren konvexe Außenseite der ersten oberstromigen Seite entspricht, eine ebene Oberfläche, die von einer Platte gebildet ist, die etwa senkrecht zur Achse des Leitungsabschnitts ist.

6. System nach einem der Ansprüche 3 bis 4 und Anspruch 5, **dadurch gekennzeichnet, dass**, wenn die filtrierende Oberfläche eine halbzylindrische Oberfläche (25) ist, deren konkave Innenseite der ersten oberstromigen Seite entspricht, mindestens eine Sammelöffnung (26a, 26b) der Körper beiderseits der filtrierenden Oberfläche zwischen der Innenseite des Leitungsabschnitts und einem Umfangsrand der filtrierende Oberfläche angeordnet ist, wobei mindestens ein Sammeltrichter (27a, 27b) der Körper unterstromig zu der mindestens einen Sammelöffnung angeordnet ist.

7. System nach einem der Ansprüche 1 bis 6, **dadurch gekennzeichnet, dass** der Leitungsabschnitt (18) einen polygonalen oder kreisrunden Querschnitt hat.

8. System nach Anspruch 7, **dadurch gekennzeichnet, dass** der Leitungsabschnitt (18) einen kreisrunden Querschnitt hat, wobei das System eine Ablenkeinheit (145, 146, 151) umfasst, die zwischen der Innenseite des Leitungsabschnitts (118) und der filtrierenden Oberfläche (125) angeordnet ist, um die von dem Strom beförderten Körper zu der filtrierenden Oberfläche zu lenken, und die sich nicht gegenüber der filtrierenden Oberfläche befinden.

9. System nach den Ansprüchen 3 und 8, **dadurch gekennzeichnet, dass** die Ablenkeinheit mindestens einen Ablenker (145, 146) umfasst, der zwischen der Innenseite des Leitungsabschnitts und der oder Sammelöffnungen (140) positioniert ist, die benachbart zu jedem der zwei gegenüberliegenden Umfangsränder (125c, 125d) der filtrierenden Oberfläche angeordnet sind.

10. System nach einem der Ansprüche 1 bis 9, **dadurch gekennzeichnet, dass** die Reinigungsvorrichtung (30) bewegbar ist, wogegen das mindestens eine Filterelement (25) fest ist, oder umgekehrt.

11. System nach einem der Ansprüche 1 bis 12, **dadurch gekennzeichnet, dass** entweder die Reinigungsvorrichtung (30) oder das mindestens eine Filterelement (25) imstande ist, eine Schwenkbewegung um eine feste Achse durchzuführen oder eine gerade Verlagerungsbewegung durchzuführen, wobei jede Bewegung eine abwechselnde Hin- und Herbewegung ist.

12. System nach einem der Ansprüche 1 bis 11, **dadurch gekennzeichnet, dass** die Reinigungsvorrichtung (30) ein oder mehrere mechanische Kehrorgane umfasst, die mit der ersten oberstromigen Seite (25a) der filtrierenden Oberfläche im Kontakt sind.

13. Anlage (1), umfassend:
- mindestens einen rohrförmigen Wärmetauscher (10),
- eine Zufuhrleitung eines Fluids (11), die mit einem Einlass des mindestens einen Wärmetauschers verbunden ist,
- eine Ableitungsleitung des Fluids (12), die mit einem Auslass des mindestens einen Wärmetauschers verbunden ist,
- eine Vielzahl von Reinigungskörpern (15), die im Innern des mindestens einen Wärmetauschers für dessen Reinigung befördert werden,
- ein Abfang- und Sammelsystem der Reinigungskörper, das auf der Fluidauslassleitung angeordnet ist,
**dadurch gekennzeichnet, dass** das Abfang- und Sammelsystem (17) der Reinigungskörper einem der Ansprüche 1 bis 12 entspricht.

14. Verfahren zum Sammeln von Körpern (15), die von einem Fluidstrom befördert werden, **dadurch gekennzeichnet, dass** das Verfahren in einem Abfangsystem (17) der von dem Fließen von Fluid beförderten Körpern umgesetzt wird, das umfasst:
- einen Leitungsabschnitt (18), umfassend eine Innenseite, die einen axialen internen Durchgang für das Fließen des Fluids,
- mindestens ein Filterelement, umfassend eine filtrierende Oberfläche (25), umfassend eine oberstromige Seite (25a) und eine zweite gegenüberliegende unterstromige Seite (25b), wobei sich die filtrierende Oberfläche transversal in dem internen Durchgang derart erstreckt, dass mit seiner ersten oberstromigen Seite Körper abgefangen werden, die durch das Fließen befördert werden, wobei mehrere Sammelöffnungen (26a, 26b) zwischen der filtrierenden Oberfläche und der Innenseite des Leitungsabschnitts freigelassen sind,
wobei das Verfahren den folgenden Schritt umfasst:
- Inbewegungversetzen des mindestens einen Filterelements (25) oder einer Reinigungsvorrichtung (30) gegenüber dem mindestens einen Filterelement (25) in einer abwechselnden Hin- und Herbewegung, um ein mechanisches Kehren jeder Zone der ersten oberstromigen Seite (25a) der filtrierenden Oberfläche durch Kontakt mit der gegenüberliegenden Reinigungsvorrichtung durchzuführen, wobei das mechanische Kehren der Oberfläche erlaubt, die von der ersten oberstromigen Seite der filtrierenden Oberfläche eingefangenen Körper zu den Sammelöffnungen (26a, 26b) der Körper zu lenken.

15. Verfahren nach Anspruch 14, **dadurch gekennzeichnet, dass** die Reinigungsvorrichtung (30) in Bewegung versetzt wird, wogegen das mindestens eine Filterelement (25) fest ist, oder umgekehrt.

## Claims

1. A system for intercepting and collecting bodies (15) conveyed by a flow of a fluid, comprising:
- a pipe portion (18) comprising an inner face that defines an axial inner passage for the flow of the fluid,
- at least one filtering element comprising a filtering surface (25) including a first upstream face (25a) and a second opposite downstream face (25b), the filtering surface extending transversely in the inner passage so as to intercept, by its first upstream face, bodies conveyed by the flow,
- a cleaning device (30) that is arranged across from the first upstream face (25a) of the filtering surface and that is able to mechanically sweep said first upstream face, **characterized in that** several collection openings (26a, 26b) are cleared between the filtering surface and the inner face of the pipe portion and the cleaning device (30) and said at least one filtering element (25) being in alternating relative back and forth motion with respect to one another such that each zone of the first upstream face of the filtering surface is swept mechanically by the cleaning device during each alternating relative back and forth movement in order to orient the bodies intercepted by the first upstream face (25a) from the filtering surface toward the collection openings for said bodies.

2. The system according to claim 1, **characterized in that** the filtering surface (25) has a general shape that extends transversely in the inner passage such that the bodies intercepted on a zone of the first upstream face (25a) of the filtering surface and swept by the cleaning device (30) run alongside said first upstream face from the filtering surface toward one or more collection openings (26a, 26b).

3. The system according to claim 1 or 2, **characterized in that** the collection openings are arranged so as to be adjacent to two opposite peripheral edges of the filtering surface.

4. The system according to claim 3, **characterized in that** it comprises, at each of the two opposite peripheral edges of the filtering surface, at least one collection hopper (27a, 27b) for the bodies forming a turbulence chamber, said at least one collection hopper being arranged downstream from at least one collection opening (26a, 26b) and communicating with said at least one collection opening.

5. The system according to one of claims 1 to 4, **characterized in that** the filtering surface has a general shape chosen from among the following geometric shapes: a semi-cylindrical surface (25) whereof the concave inner face corresponds to the first upstream face, a semi-cylindrical surface (25) whereof the convex outer face corresponds to the first upstream face, a planar surface formed by a panel substantially perpendicular to the axis of the pipe portion.

6. The system according to one of claims 3 to 4 and claim 5, **characterized in that**, when the filtering surface is a semi-cylindrical surface (25) whereof the concave inner face corresponds to the first upstream face, at least one collection opening (26a, 26b) of the bodies is arranged on either side of said filtering surface, between the inner face of the pipe portion and a peripheral edge of the filtering surface, at least one collection hopper (27a, 27b) of the bodies being arranged downstream from said at least one collection opening.

7. The system according to one of claims 1 to 6, **characterized in that** the pipe portion (18) has a polygonal or circular cross-section.

8. The system according to claim 7, **characterized in that** the pipe portion (18) having a circular cross-section, the system comprises a deflection assembly (145, 146, 151) that is positioned between the inner face of the pipe portion (118) and the filtering surface (125) in order to steer, toward the filtering surface, the bodies conveyed by the flow and that are not situated across from the filtering surface.

9. The system according to claims 3 and 8, **characterized in that** the deflection assembly comprises at least one deflector (145, 146) that is positioned between the inner face of the pipe portion and the collection opening(s) (140) arranged so as to be adjacent to each of the two opposite peripheral edges (125c, 125d) of the filtering surface.

10. The system according to one of claims 1 to 9, **characterized in that** the cleaning device (30) is mobile, while said at least one filtering element (25) is stationary, or vice versa.

11. The system according to one of claims 1 to 12, **characterized in that** one from among the cleaning device (30) and said at least one filtering element (25) is able to perform a pivoting movement around a fixed axis or to perform a rectilinear translational movement, each movement being an alternating back and forth movement.

12. The system according to one of claims 1 to 11, **characterized in that** the cleaning device (30) comprises one or several mechanical sweeping members that are in contact with the first upstream face (25a) of the filtering surface.

13. An installation (1) comprising:
- at least one tubular heat exchanger (10),
- a fluid intake pipe (11) connected to an inlet of said at least one heat exchanger,
- a fluid discharge pipe (12) connected to an outlet of said at least one heat exchanger,
- a plurality of cleaning bodies (15) conveyed inside said at least one heat exchanger for cleaning thereof,
- a system for intercepting and collecting cleaning bodies arranged on the fluid discharge pipe,
- **characterized in that** the system (17) for intercepting and collecting cleaning bodies is according to one of claims 1 to 12.

14. A method for collecting bodies (15) conveyed by a flow of a fluid, **characterized in that** the method is carried out in a system (17) for intercepting bodies conveyed by the fluid flow that comprises:
- a pipe portion (18) comprising an inner face that defines an axial inner passage for the flow of the fluid,
- at least one filtering element comprising a filtering surface (25) including a first upstream face (25a) and a second opposite downstream face (25b), the filtering surface extending transversely in the inner passage so as to intercept, by its first upstream face, bodies conveyed by the flow while leaving several collection openings (26a, 26b) clear between the filtering surface and the inner face of the pipe portion,
the method comprising the following step:
- setting said at least one filtering element (25) or a cleaning device (30) in motion with respect to said at least one filtering element (25) in an alternating back and forth movement in order to perform mechanical sweeping of each zone of the first upstream face (25a) of the filtering surface by contact with the cleaning device opposite, the mechanical sweeping of the surface making it possible to orient the bodies intercepted by the first upstream face from the filtering surface toward the collection openings (26a, 26b) of said bodies.

15. The method according to claim 14, **characterized in that** the cleaning device (30) is set in motion, while said at least one filtering element (25) is stationary, or vice versa.
